# EUROPÄISCHE PATENTANMELDUNG

(11) **EP 2 735 396 A1**
(43) Veröffentlichungstag der Anmeldung: **28.05.2014**
(21) Anmeldenummer: 12193792.4
(22) Anmeldetag: 22.11.2012
(51) Int. Cl.: B23K 20/12, B23K 33/00

(54) **Fügeflächenstruktur und Verfahren zum Fügen von Bauteilen**

(71) Anmelder: Siemens Aktiengesellschaft, 80333 München (DE)
(72) Erfinder: Burbaum, Bernd, Dr., 14612 Falkensee (DE)

(57) **Zusammenfassung**

Die Erfindung betrifft eine Fügeflächenstruktur umfassend ein erstes Bauteil (1) mit einer ersten Fügefläche (11) und einem zweiten Bauteil (2) mit einer zweiten Fügefläche (10), wobei die erste Fügefläche (11) mit der zweiten Fügefläche (10), insbesondere durch Reibschweißen, zu verbinden ist,
wobei die erste Fügefläche (11) Vertiefungen aufweist und die zweite Fügefläche (10) dazu korrespondierende Vorsprünge aufweist, so dass die Vorsprünge beim Ausrichten der ersten Fügefläche (11) zu der zweiten Fügefläche (10) aneinander in die Vertiefungen greifen. Weiterhin betrifft die Erfindung ein Verfahren zum Fügen von Bauteilen.

## Beschreibung

Die Erfindung betrifft eine Fügeflächenstruktur umfassend eines ersten Bauteils mit einer ersten Fügefläche und einem zweiten Bauteil mit einer zweiten Fügefläche, wobei die erste Fügefläche mit der zweiten Fügefläche, insbesondere durch Reibschweißen, zu verbinden ist. Weiterhin betrifft die Erfindung ein Verfahren zum Fügen von Bauteilen.

Das Reibschweißen gehört zur Gruppe der Pressschweißverfahren. Beim linearen Reibschweißen wird die Energiezufuhr durch eine lineare Relativbewegung der Fügeteile zueinander eingebracht. Durch die Relativbewegung der Bauteile und durch Druck wird die für die Schweißung erforderliche Energie in Form von Wärme erzeugt. Diese Wärmeerzeugung führt im Vergleich zu den Schmelzschweißverfahren zu einer niedrigeren Fügetemperatur, die unterhalb der Schmelztemperatur der zu verbindenden Werkstoffe liegt. Dadurch können unerwünschte Gefügephasen minimiert oder vermieden werden. Aufgrund der großen Wärmeleitung bei Metallen muss eine hinreichende Reibleistung (Wärmeleistung) aufgebracht werden. Im Hinblick auf die Fügequalität besteht ein Problem darin, dass bei der Abkühlung nach Beendigung der Reib- und Stauchphase des Schweißvorgangs in der Schweißzone infolge beispielsweise unterschiedlicher Volumen- bzw. Oberflächenverhältnisse in der Umgebung der Schweißzone stark voneinander abweichende Temperaturprofile auftreten, die zu ungünstigen Spannungen oder Randfehlern in der Fügezone führen und die Fügequalität herabsetzen können. Zudem entsteht beim Reibschweißen üblicherweise eine Schweißwulst durch das beim Pressen verdrängte Material, die üblicherweise nachgearbeitet werden muss, um das überstehendes Material zu entfernen. Eine Entfernung der Schweißwulst durch eine spanende Bearbeitung, zum Beispiel Abdrehen oder Fräsen ist ein zusätzlicher Prozessschritt.

Die Aufgabe der Erfindung ist die Angabe einer Fügeflächenstruktur, welche die oben genannten Probleme vermindert oder gar vermeidet. Weiterhin liegt der Erfindung die Aufgabe zugrunde, ein verbessertes Verfahren zum Fügen von Bauteilen anzugeben.

Die auf die Struktur bezogene Aufgabe wird gelöst durch die Angabe einer Fügeflächenstruktur nach Anspruch 1. Ferner wird die Aufgabe mit einem Verfahren zum Fügen von Bauteilen gemäß Anspruch 7 gelöst. Vorteilhafte Weiterbildungen der Erfindung sind in den abhängigen Ansprüchen beschrieben.

Durch die erfindungsgemäße Fügeflächenstruktur und das erfindungsgemäßen Verfahren entsteht ein Wärmestau in einer ersten Fügefläche mit Vertiefungen eines ersten Bauteils und in einer zweiten Fügefläche mit korrespondierenden Vorsprüngen eines zweiten Bauteils. Als Resultat dieses Wärmestaus wird die aufzubringende Energie für den Fügeprozess wesentlich verkleinert. Aufgrund der geringen aufzuwendenden Energie können stark voneinander abweichende Temperaturprofile vermieden werden. Die Fügequalität wird dadurch deutlich verbessert. Weiterhin wird durch das Verfahren und die erfindungsgemäße Fügeflächenstruktur der zu fügenden Bauteile, die fügende, insbesondere die reibende Fläche vergrößert, so dass effizienter und schneller die Wärme in die zu verbindenden Bauteile eingebracht wird. Dadurch erfolgt eine effizientere Steigung des Fügeprozesses. Der beim Füge- bzw. Reibschweissprozess entstehende viskose Werkstoff wird in die Vertiefungen gedrückt bis dieser zumindest teilweise mit Werkstoff gefüllt ist. Dadurch werden die beiden Fügeflächen stoffschlüssig und auch formschlüssig miteinander verbunden. Durch das erfindungsgemäße Verfahren und die erfindungsgemäße Fügeflächenstruktur wird ein Zeitfenster, in dem der Fügeprozess stattfinden muss, und auch die Zeiten, die der eigentliche Fügeprozess benötigt, wesentlich verkleinert.

In besonderer Ausgestaltung besteht die erste Fügefläche des ersten Bauteils aus mehreren Kanten, wobei zumindest eine der Kanten eine erste Abschrägung, insbesondere eine erste Fase hat. Durch die eine erste Abschrägung kann an dieser abgeschrägten Fügefläche eine kleine bis gar keine Schweißwulst erzielt werden, da die Schweißwulst in die Abschrägung sozusagen "hineinwandert".

Weiterhin kann auch die Kante der zweiten Fügefläche des zweiten Bauteils, insbesondere die der Kante mit der ersten Abschrägung gegenüberliegende Kante, eine zweite Abschrägung, insbesondere eine zweite Fase, aufweisen. Dadurch, dass vor dem Fügen durch die erste und zweite Abschrägung keine vollständige Berührungsfläche ausgebildet ist, sondern diese erst während des Fügevorgangs entsteht, kann die Schweißwulst definiert in der ersten und zweiten Abschrägung ausgebildet werden. Dadurch kann eine später zu entfernende Schweißwulst vermieden oder zumindest verkleinert werden. Auch kann sie definiert an denjenigen Stellen entstehen, an denen sich ein späteres Entfernen durch beispielsweise spanende Bearbeitung besonders einfach bewerkstelligen lässt. Weiterhin lässt sich dadurch die Spannung im Kantenbereich der Fügeflächen reduzieren. Dadurch ist eine gleichmäßige Erwärmung der Kanten beim Fügen, insbesondere beim Reibschweißen, sichergestellt.

Das Fügen, insbesondere lineare Reibschweißen erfolgt in einer Schwingungsrichtung. Das erste Bauteil weist eine erste Länge in Schwingungsrichtung und das zweite Bauteil weist eine zweite Länge in Schwingungsrichtung auf. In besonderer Ausgestaltung sind die Vertiefungen als Kerben und die Vorsprünge als korrespondierende Zacken ausgebildet. Die Kerben als auch die Zacken erstrecken sich über die erste Länge und zweite Länge. Insbesondere durch dieses Profilieren in Schwingungsrichtung kann aufgrund des Wärmestaus die aufzubringende Energie für den Fügeprozess über die gesamte Länge wesentlich verkleinert werden.

Vorteilhafterweise weisen die Zacken eine abgebrochene Spitze auf. So kann eine Berührung der zu fügenden Flächen sichergestellt werden. Weiterhin kann hier die Schweißwulst, welche zwischen den Vertiefungen und den Vorsprüngen entsteht, hineinfließen.

Weitere Merkmale, Eigenschaften und Vorteile der vorliegenden Erfindung ergeben sich aus der nachfolgenden Beschreibung unter Bezugnahme auf die beiliegenden Figuren. Darin zeigt schematisch:
- Fig 1:: eine erfindungsgemäße Fügeflächenstruktur mit dem ersten und zweiten Bauteil,
- Fig 2:: einen Querschnitt einer erfindungsgemäßen Fügeflächenstruktur mit dem ersten und zweiten Bauteil,
- Fig 3:: ausschnittsweise eine erfindungsgemäße Fügeflächenstruktur.

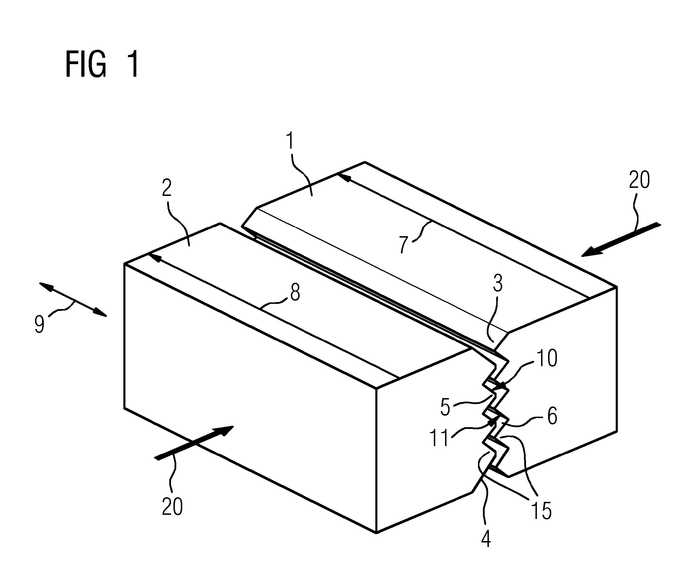

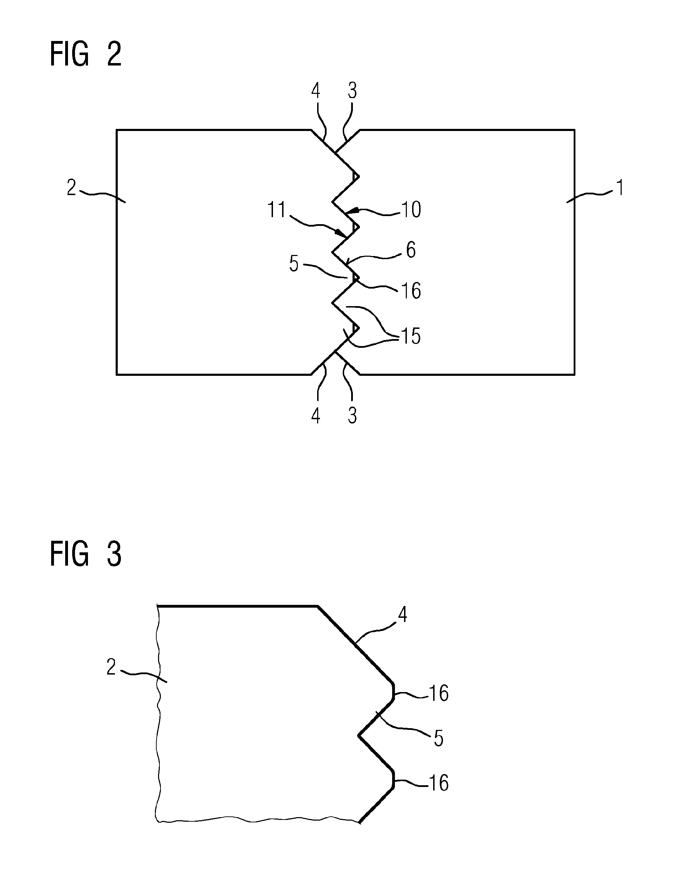

Fig. 1 zeigt ein erstes Bauteil 1 und ein zweites Bauteil 2, welche durch Fügen, insbesondere durch Reibschweißen, an einer ersten Fügefläche 11 des ersten Bauteils 1 und an einer zweiten Fügefläche 10 des zweiten Bauteils 2 verbunden werden. Ohne Beschränkung der Allgemeinheit wird als Fügen immer das Reibschweißen herangezogen. Dabei werden das erste Bauteil 1 und das zweite Bauteil 2 durch lineares Reibschweißen in einer Schwingungsrichtung 9 unter Zuhilfenahme einer Kraft 20, die im Wesentlichen senkrecht zur Schwingungsrichtung 9 und in der gleichen Ebene wie die Schwingungsrichtung 9 liegt, aneinandergefügt. Das erste Bauteil 1 und das zweite Bauteil 2 weisen eine erste Länge 7 und eine zweite Länge 8 auf. Die erste Fügefläche 11 und die zweite Fügefläche 10 erstrecken sich in Schwingungsrichtung 9 dabei über die gesamte erste Länge 7 bzw. zweite Länge 8. Das erste Bauteil 1 weist an seiner ersten Fügefläche 11 dabei mehrere parallele Kerben 6 auf. Die Kerben 6 erstrecken sich über die gesamte erste Länge 7 des ersten Bauteils 1. Anstatt den Kerben 6 können selbstverständlich auch andere Vertiefungen verwendet werden. Korrespondierend zu den Kerben 6 werden an die zweite Fügefläche 10 des zweiten Bauteils 2 Zacken 5 angebracht. Die erste Fügefläche 11 des ersten Bauteils 1 und die zweite Fügefläche 10 des zweiten Bauteils 2 werden zur Ausbildung einer Fügezone durch Reibschweissen aneinander ausgerichtet, so dass die Zacken 5 in die Kerben 6 greifen. Durch diese Fügeflächenstruktur in Schwingungsrichtung 9 wird beim Fügen die sich reibende Fläche vergrößert, so dass schneller und effizienter die Wärme in das Bauteil 1 und das Bauteil 2 eingebracht wird. Durch die Kerben 6 und die Zacken 5 entstehen Wärmestaus 15 (Fig. 1 und Fig. 2) in der Fügezone des ersten Bauteils 1 und des zweiten Bauteils 2. Aufgrund des Wärmestaus 15 kann die aufzubringende Energie für den Fügevorgang verkleinert werden. Dadurch erfolgt eine effizientere Steigung des Fügevorgangs. Das Zeitfenster in dem das Reibschweißen stattfindet, nachfolgend als Prozessfenster bezeichnet, wird daher wesentlich verkleinert ebenso wie die Zeit des Fügevorgangs selber. Der beim Reibschweißen entstehende viskose Werkstoff wird in die Kerben 6 gedrückt bis dieser zumindest teilweise mit Werkstoff gefüllt ist. Dadurch werden die erste Fügefläche 11 und die zweite Fügefläche 10 stoffschlüssig und formschlüssig miteinander verbunden.

Fig. 2 zeigt einen Querschnitt einer erfindungsgemäßen Fügeflächenstruktur mit dem ersten Bauteil 1 und dem zweiten Bauteil 2. Die erste Fügefläche 11 des ersten Bauteils 1 besteht aus mehreren Kanten. Zwei der Kanten des ersten Bauteils 1 weisen jeweils eine erste Abschrägung, nachfolgend als eine erste Fase 3 bezeichnet, auf. Hier weisen diejenigen zwei Kanten eine erste Fase 3 auf, welche parallel zu den Kerben 6 sind. Es können aber auch alle Kanten eine Fase 3 aufweisen. Die zweite Fügefläche 10 des zweiten Bauteils 2 besteht ebenfalls aus mehreren Kanten. Zwei der Kanten des zweiten Bauteils 2 weisen jeweils eine zweite Abschrägung, nachfolgend als eine zweite Fase 4 bezeichnet, auf. Hier weisen diejenigen zwei Kanten eine zweite Fase 4 auf, welche parallel zu den Zacken 5 sind.

Dadurch dass vor dem Schweißen durch die Abschrägung keine vollständige Berührungsfläche ausgebildet ist, sondern diese erst während des Schweißvorgangs entsteht, kann die Schweißwulst definiert in der Abschrägung ausgebildet werden. Da die Schweißwulst in die erste Fase 3 und in die zweite Fase 4 sozusagen "hineinwandert", kann eine kleine bis gar keine später zu entfernende Schweißwulst erzielt werden. Die Schweißwulst entsteht im günstigsten Fall komplett in der ersten Fase 3 und der zweiten Fase 4, wodurch eine Nachbearbeitung komplett eingespart wird. Daher kann beim Fügevorgang die Schweißwulst vermieden oder gar verkleinert werden.

Auch können eventuell vorhandene Scherspannungen und Normalspannungen in dem Bereich der zu fügenden Kanten reduziert werden, da durch die erste Fase 3 und die zweite Fase 4 eine gleichmäßige Erwärmung der Kanten sichergestellt werden kann.

Die Zacken 6 des zweiten Bauteils 2 können eine abgebrochene Spitze 16 aufweisen, Fig. 2 und Fig. 3. So kann eine Berührung der ersten Fügefläche 11 zu der zweiten Fügefläche 10 sichergestellt werden. Weiterhin kann hier die Schweißwulst, welche zwischen den Kerben 6 und den Zacken 5 entsteht, hineinfließen und zur Verbesserung der Fügung beitragen.

Durch die erfindungsgemäßen Fügeflächenstruktur und das erfindungsgemäßen Verfahren lässt sich daher das Prozessfenster verkleinern. Ebenso wird eine energieeffiziente Steigerung des Prozesses bewirkt. Während des Fügeprozesses kann die Schweißwulst verkleinert oder gar vermieden werden. Ebenso wird die spanende Nacharbeit zum entfernen einer möglichen überstehenden Schweißwulst verkleinert oder entfernt.

## Patentansprüche

1. Fügeflächenstruktur umfassend ein erstes Bauteil (1) mit einer ersten Fügefläche (11) und einem zweiten Bauteil (2) mit einer zweiten Fügefläche (10), wobei die erste Fügefläche (11) mit der zweiten Fügefläche (10), insbesondere durch Reibschweißen, zu verbinden ist,
**dadurch gekennzeichnet, dass** die erste Fügefläche (11) Vertiefungen aufweist und die zweite Fügefläche (10) dazu korrespondierende Vorsprünge aufweist, so dass die Vorsprünge beim Ausrichten der ersten Fügefläche (11) zu der zweiten Fügefläche (10) aneinander in die Vertiefungen greifen.

2. Fügeflächenstruktur nach Anspruch 1,
**dadurch gekennzeichnet, dass** die erste Fügefläche (11) des ersten Bauteils (1) aus mehreren Kanten besteht und zumindest eine der Kanten eine erste Abschrägung, insbesondere eine erste Fase (3), hat.

3. Fügeflächenstruktur nach Anspruch 2,
**dadurch gekennzeichnet, dass** die zweite Fügefläche (10) des zweiten Bauteils (2) aus mehreren Kanten besteht und zumindest eine der Kanten, insbesondere die der Kante mit der ersten Abschrägung gegenüberliegende Kante der zweiten Fügefläche des zweiten Bauteils (1), eine zweite Abschrägung, insbesondere eine zweite Fase (4), hat.

4. Fügeflächenstruktur nach einem der vorhergehenden Ansprüche,
**dadurch gekennzeichnet, dass** die Vertiefungen als Kerben (6) und die Vorsprünge als korrespondierende Zacken (5) ausgebildet sind.

5. Fügeflächenstruktur nach Anspruch 4,
**dadurch gekennzeichnet, dass** das erste Bauteil (1) eine erste Länge (7) und das zweite Bauteil (2) eine zweite Länge (8) aufweist und die Kerben (6) sich über die erste Länge (7) und die Zacken (5) sich über die zweite Länge (8) erstrecken.

6. Fügeflächenstruktur nach Anspruch 4 oder 5,
**dadurch gekennzeichnet, dass** die Zacken (5) eine abgebrochene Spitze (16) aufweisen.

7. Verfahren zum Fügen von einem ersten Bauteil (1) mit einem zweiten Bauteil (2) mit folgenden Schritten
a. Bereitstellen eines ersten Bauteils (1) und eines zweiten Bauteils (2), wobei das erste Bauteil (1) eine erste Fügefläche (11) mit ein oder mehreren Vertiefungen, und das zweite Bauteil (2) eine zweite Fügefläche (10) mit einem Vorsprung oder mehreren Vorsprüngen, die zu den Vertiefungen korrespondieren, aufweist, an welchen das erste Bauteil (1) und das zweite Bauteil (2) unter Ausbildung einer Fügezone zu verbinden sind,
b. Ausrichten der erste Fügefläche (11) des ersten Bauteils (1) mit der zu verbindenden zweiten Fügefläche (10) des zweiten Bauteils (2), so dass die ein oder mehreren Vorsprünge in die ein oder mehreren Vertiefungen greifen,
c. Verbinden des ersten Bauteils (1) mit dem zweiten Bauteil (2) durch Fügen.

8. Verfahren zum Fügen von Bauteilen nach Anspruch 7,
**dadurch gekennzeichnet, dass** das erste Bauteil (1) und das zweite Bauteil (2) durch oszillierendes, insbesondere lineares Reibschweißen mit einer vorgegebenen Schwingungsrichtung (9) verbunden werden.

9. Verfahren zum Fügen von Bauteilen nach Anspruch 8,
**dadurch gekennzeichnet, dass** das erste Bauteil (1) eine erste Länge (7) in Schwingungsrichtung (9) und das zweite Bauteil (2) eine zweite Länge (8) in Schwingungsrichtung (9) aufweist und die Vertiefungen sich über die erste Länge (7) und die Vorsprünge sich über die zweite Länge (8) erstrecken.
